# FASCICULE DE BREVET EUROPEEN

(11) **EP 3 572 173 B1**
(45) Date de publication et mention de la délivrance du brevet: **13.07.2022**
(21) Numéro de dépôt: 19176157.6
(22) Date de dépôt: 23.05.2019
(51) Int. Cl.: B23B 49/02

(54) **CANON DE GUIDAGE D'UN OUTIL DE COUPE, MACHINE ET SYSTÈME DE PERÇAGE ASSOCIÉS, UTILISATION DU SYSTÈME DE PERÇAGE ET PROCÉDÉ D'ENTRETIEN DE LA MACHINE DE PERÇAGE**
FÜHRUNGSBUCHSE EINES SCHNEIDEWERKZEUGS, ENTSPRECHENDE BOHRMASCHINE UND ENTSPRECHENDES BOHRSYSTEM, VERWENDUNG DES BOHRSYSTEMS UND WARTUNGSVERFAHREN DER BOHRMASCHINE
GUIDE BUSHING FOR A CUTTING TOOL, ASSOCIATED DRILLING MACHINE AND SYSTEM, USE OF THE DRILLING SYSTEM AND MAINTENANCE METHOD OF THE DRILLING MACHINE

(30) Priorité: 24.05.2018 FR 1854422
(43) Date de publication de la demande: 27.11.2019
(73) Titulaire: PV Tool France, 33217 Saint Jean d'Illac (FR)
(72) Inventeur: Wanin, Etienne, 33600 Pessac (FR)
(74) Mandataire: Audic, Hervé

(56) Documents cités:
- CN-U- 201 702 418
- GB-A- 588 458
- GB-A- 607 571
- GB-A- 2 444 555

## Description

### DOMAINE TECHNIQUE

La présente invention concerne un canon de guidage d'un outil de coupe, une machine et un système de perçage associés, l'utilisation du système de perçage et un procédé d'entretien de la machine de perçage.

L'invention s'applique en particulier dans le domaine du perçage des pièces de structure aéronautique.

### ARRIÈRE-PLAN TECHNOLOGIQUE

Il est connu d'utiliser un canon de guidage d'un outil de coupe tel qu'un foret, présentant une extrémité arrière munie d'une surface externe conique pour être emmanchée en force dans un support de canon d'une machine de perçage.

Il est connu que la partie avant du canon s'use le plus vite. Lorsque cette usure devient trop importante, le canon entier est remplacé.

L'invention a pour but de proposer un canon plus économique.

Par ailleurs, la demande de brevet publiée sous le numéro GB 2 444 555 A décrit un canon de guidage d'un outil de coupe selon le préambule de la revendication 1.

### RÉSUMÉ DE L'INVENTION

Il est proposé un canon de guidage d'un outil de coupe tel qu'un foret, selon la revendication 1.

L'inventeur a en effet remarqué que la partie du canon la plus difficile à usiner est la surface externe conique. Ainsi, de manière surprenante, le surcoût entraîné par l'utilisation d'un insert, par rapport à un canon d'une seule pièce, est largement compensé par le fait qu'il n'est pas nécessaire de changer le corps principal du canon et en particulier l'extrémité munie de la surface externe conique.

Des caractéristiques optionnelles du canon de guidage sont énoncées dans les revendications 2 à 4.

Il est également proposé une machine de perçage selon la revendication 5.

Il est également proposé un système de perçage selon la revendication 6.

Des caractéristiques optionnelles du système de perçage sont énoncées dans la revendication 7.

Il est également proposé une utilisation d'un système de perçage selon la revendication 8.

Des caractéristiques optionnelles de cette utilisation sont énoncées dans la revendication 9.

Il est également proposé un procédé d'entretien d'une machine de perçage selon la revendication 10.

### DESCRIPTION DES FIGURES

La figure 1 est une vue simplifiée d'un système de perçage selon l'invention.
Les figures 2 et 3 sont des vues en coupe d'un canon d'une machine de perçage du système de la figure 1, respectivement avant vissage d'un insert et après.

### DESCRIPTION DÉTAILLÉE

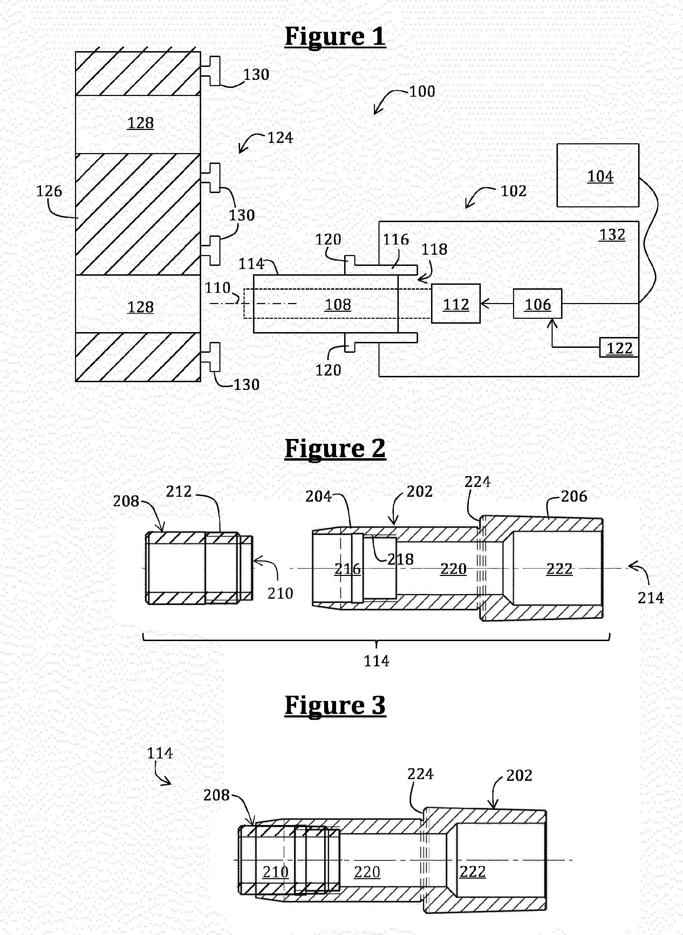

En référence à la figure 1, un système de perçage 100 (appelé en anglais « drilling system ») selon l'invention va à présent être décrit.

Le système 100 comporte tout d'abord une machine de perçage 102 et une source d'énergie 104 à laquelle la machine de perçage 102 est connectée. Dans l'exemple décrit, la source d'énergie 104 est une source d'énergie pneumatique.

La machine de perçage 102 comporte en outre un moteur 106 conçu pour recevoir de l'énergie depuis la source d'énergie 104. Dans l'exemple décrit, le moteur 106 est donc un moteur pneumatique.

La machine de perçage 102 comporte en outre un outil de coupe 108 destiné à être entraîné en rotation par le moteur 106 autour d'un axe de perçage 110 parallèle à une direction avant/arrière de la machine de perçage 102. Dans l'exemple décrit, l'outil de coupe 108 est un foret. En outre, dans l'exemple décrit, la machine de perçage 102 est de type axial, ce qui signifie que l'axe de perçage 110 ne bouge pas pendant l'opération de perçage, par opposition par exemple à une machine de perçage de type orbital dans laquelle l'axe de perçage bouge pendant l'opération de perçage.

La machine de perçage 102 comporte en outre un dispositif 112 de déplacement de l'outil de coupe 108, conçu pour faire avancer puis reculer l'outil de coupe 108 pendant l'opération de perçage. Le dispositif 112 est destiné à être activé par le moteur 106.

La machine de perçage 102 comporte en outre un canon 114 délimitant un trou longitudinal traversant dans lequel l'outil de coupe 108 s'étend au moins en partie de manière à être guidé lors de son avance et de son recul.

La machine de perçage 102 comporte en outre un support de canon 116 présentant une ouverture 118 de réception du canon 114.

La machine de perçage 102 comporte en outre un dispositif 120 de verrouillage à une grille qui sera décrite plus loin. Dans l'exemple décrit, le dispositif 120 comporte au moins deux pattes s'étendant transversalement à la direction avant/arrière.

La machine de perçage 102 comporte en outre un interrupteur 122 destiné à être actionné par un utilisateur (humain) de la machine de perçage 102 de manière à transmettre un signal de démarrage au moteur 106.

Le système 100 comporte par ailleurs une grille 124 (appelée « drill jig » en anglais) comportant un corps 126, généralement plan, destiné à être fixé sur une pièce à percer (non représentée). Dans l'exemple décrit, la pièce à percer est une pièce de structure d'un appareil aéronautique. La grille 124 est munie de trous traversant 128 de réception du canon 114 de la machine de perçage 102, de manière à positionner de manière précise la machine de perçage 102 par rapport à la grille 124, et donc par rapport à la pièce à percer.

La grille 124 comporte en outre un dispositif 130, complémentaire du dispositif 120, de verrouillage de la machine de perçage 102 à la grille 124. Dans l'exemple décrit, le dispositif 130 comporte, pour chaque trou 128, deux butées (par exemple, deux vis) destinées à respectivement retenir les pattes du dispositif 120. Ainsi, le canon 114 est destiné à être inséré dans un trou 128 de la grille 124, puis à être tourné, par exemple d'un quart de tour, pour placer les pattes du dispositif 120 devant les butées du dispositif 130 (entre le corps 126 de la grille 124 et les butées du dispositif 130) pour assurer le verrouillage.

En référence à la figure 2, le canon 114 comporte tout d'abord un corps principal 202 de forme générale tubulaire et présentant une extrémité avant 204 et une extrémité arrière 206. L'extrémité arrière 206 est munie d'une surface externe conique présentant un diamètre diminuant vers l'arrière, permettant d'emmancher en force l'extrémité arrière 206 dans l'ouverture 118 du support de canon 116.

Le canon 114 comporte en outre un insert 208 conçu pour être vissé dans l'extrémité avant 204 du corps principal 202.

Plus précisément, l'insert 208 est de forme générale tubulaire et délimite un trou 210 longitudinal traversant de guidage de l'outil de coupe 108. Le trou 210 est circulaire et présente un diamètre dit de guidage. L'insert 208 présente en outre un filetage externe 212.

Par ailleurs, le corps principal 202 délimite un trou 214 longitudinal traversant présentant, au niveau de l'extrémité avant 204, une portion 216 de réception de l'insert munie d'un filetage interne 218 complémentaire du filetage externe 212 de l'insert 208. Le trou 214 présente en outre une portion centrale 220 circulaire ayant un diamètre supérieur à celui du trou 210 de l'insert 208 et une portion arrière 222 ayant un diamètre supérieur à celui de la portion centrale 220.

Le corps principal 202 présente en outre un épaulement externe 224 orienté vers l'avant, destiné à venir en appui contre la grille 124 lorsque le canon 114 est inséré dans un des trous 128.

En référence à la figure 3, le canon 114 est représenté avec l'insert 208 vissé dans l'extrémité avant du corps principal 202. Comme cela est apparent, le canon 114 délimite alors un trou longitudinal comportant, de l'avant vers l'arrière, le trou 210 de l'insert 208, la portion centrale 220 et la portion arrière 222 du trou 214 du corps principal 202. Les portions centrale 220 et arrière 222, du fait de leur diamètre plus grand que celui du trou 210 permettent en particulier l'évacuation des copeaux de la pièce en train d'être percée.

Lors de l'utilisation de la machine de perçage 102, l'outil de coupe 108 et les copeaux résultant des perçages des pièces provoquent dans le temps une usure des parois internes délimitant le trou 210, beaucoup plus importante que dans les portions centrale 220 et arrière 222. Lorsque cette usure devient trop importante, lors d'une phase d'entretien de la machine de perçage 102, l'insert 208 est dévissé du corps principal 202 et un autre insert 208, neuf, est vissé à la place. Cette phase d'entretien est par exemple réalisée alors que l'extrémité arrière 206 du canon 114 est emmanchée en force dans le support de canon 116. Ainsi, le corps principal 202 peut être utilisé plus longtemps que dans l'état de la technique où le canon 114 est formé d'une seule pièce.

En outre, le changement de l'insert permet de facilement changer le diamètre de guidage, en cas de changement d'outil de coupe.

La présente invention n'est pas limitée au mode de réalisation décrit précédemment, mais est au contraire définie par les revendications qui suivent. Il sera en effet apparent à l'homme du métier que des modifications peuvent y être apportées.

## Revendications

1. Canon (114) de guidage d'un outil de coupe (108) tel qu'un foret, présentant une extrémité arrière (206) munie d'une surface externe conique pour être emmanchée en force dans un support de canon (116) d'une machine de perçage (102), comportant :
- un corps principal (202) présentant une extrémité avant (204) et l'extrémité arrière (206) munie de la surface externe conique, et
- un insert (208) de guidage de l'outil de coupe (108),
**caractérisé en ce que** l'insert (208) est conçu pour être vissé à l'extrémité avant (204) du corps principal (202), et **en ce que** le corps principal (202) présente un épaulement externe (224) orienté vers l'avant, destiné à venir en appui contre une grille (124).

2. Canon (114) selon la revendication 1, dans lequel l'insert (208) comporte un filetage externe (212) complémentaire d'un filetage interne (218) de l'extrémité avant (204) du corps principal (202), afin d'être vissé dans l'extrémité avant (204) du corps principal (202).

3. Canon (114) selon la revendication 1 ou 2, dans lequel l'insert (208) délimite un trou de guidage (210) de l'outil de coupe (108) ayant un certain diamètre et dans lequel le corps principal (202) délimite un trou (214) comportant une première portion (220) destinée à être située à l'arrière et dans la continuité du trou de guidage (210) et ayant un diamètre supérieur à celui du trou de guidage (210).

4. Canon (114) selon la revendication 3, dans lequel le trou (214) du corps principal (202) comporte en outre une deuxième portion (222) située à l'arrière et dans la continuité de la première portion (220) et ayant un diamètre supérieur à celui de la première portion (220).

5. Machine de perçage (102) comportant :
- un support de canon (116) présentant une ouverture (118),
- un canon (114) selon l'une quelconque des revendications 1 à 4, dont l'extrémité arrière (206) est destinée à être emmanchée en force dans l'ouverture (118) du support de canon (116),
- un outil de coupe (108) tel qu'un foret s'étendant au moins en partie dans le canon (114),
- un dispositif (112) de déplacement de l'outil de coupe (108) conçu pour faire avancer puis reculer l'outil de coupe (108), et
- un moteur (106) conçu pour entraîner l'outil de coupe (108) en rotation et pour activer le dispositif (112) de déplacement de l'outil de coupe (108),
l'outil de coupe (108) étant destiné à être guidé par l'insert (208) lors de son avance et de son recul.

6. Système de perçage (100) comportant :
- une machine de perçage (102) selon la revendication 5, et
- une grille (124) destinée à être fixée à une pièce à percer et présentant des trous traversant (128) de réception du canon (114) de la machine de perçage (102).

7. Système de perçage (100) selon la revendication 6, dans lequel la machine de perçage (102) et la grille (124) comportent respectivement des dispositifs (120, 130) complémentaires l'un de l'autre de verrouillage de la machine de perçage (102) à la grille (124) lorsque le canon (114) est reçu dans l'un des trous traversant (128) de la grille (124).

8. Utilisation du système de perçage (100) selon la revendication 6 ou 7, pour percer une pièce de structure aéronautique.

9. Utilisation du système de perçage (100) selon la revendication 8, dans laquelle un utilisateur humain manipule la machine de perçage (102) pour insérer son canon (114) dans un des trous traversant (128) de la grille (124), puis démarre le moteur (106) de la machine de perçage (102).

10. Procédé d'entretien d'une machine de perçage (102) selon la revendication 5, dans lequel, l'insert (208) est dévissé du corps principal (202), puis un autre insert est vissé à la place.

## Patentansprüche

1. Führungsbuchse (114) eines Schneidwerkzeugs (108) wie eines Bohrers, ein hinteres Ende (206) aufweisend, das mit einer konischen Außenoberfläche versehen ist, um mit Kraft in einen Buchsenhalter (116) einer Bohrmaschine (102) eingeführt zu werden, umfassend:
- einen Hauptkörper (202), der ein vorderes Ende (204) und das hintere Ende (206), das mit der konischen Außenoberfläche versehen ist, aufweist, und
- einen Einsatz (208) zum Führen des Schneidwerkzeugs (108],
**dadurch gekennzeichnet, dass** der Einsatz (208) gestaltet ist, um an das vordere Ende (204) des Hauptkörpers (202) geschraubt zu werden, und dadurch, dass der Hauptkörper (202) einen äußeren Ansatz (224) aufweist, der nach vorne gerichtet ist, der dazu bestimmt ist, sich an ein Gitter (124) anzulegen.

2. Buchse (114) nach Anspruch 1, wobei der Einsatz (208) ein ergänzendes Außengewinde (212) eines Innengewindes (218) des vorderen Endes (204) des Hauptkörpers (202) umfasst, um in das vordere Ende (204) des Hauptkörpers (202) geschraubt zu werden.

3. Buchse (114) nach Anspruch 1 oder 2, wobei der Einsatz (208) ein Führungsloch (210) des Schneidwerkzeugs (108) begrenzt, das einen bestimmten Durchmesser aufweist, und wobei der Hauptkörper (202) ein Loch (214) begrenzt, das einen ersten Abschnitt (220) umfasst, der dazu bestimmt ist, hinten und in der Fortsetzung des Führungsloches (210) gelegen zu sein, und einen Durchmesser aufweist, der größer als jener des Führungsloches (210) ist.

4. Buchse (114) nach Anspruch 3, wobei das Loch (214) des Hauptkörpers (202) weiter einen zweiten Abschnitt (222) umfasst, der sich hinten und in der Fortsetzung des ersten Abschnitts (220) befindet, und einen Durchmesser aufweist, der größer als jener des ersten Abschnitts (220) ist.

5. Bohrmaschine (102), umfassend:
- einen Buchsenhalter (116), der eine Öffnung (118) aufweist,
- eine Buchse (114) nach einem der Ansprüche 1 bis 4, deren hinteres Ende (206) dazu bestimmt ist, mit Kraft in die Öffnung (118) des Buchsenhalters (116) eingeführt zu werden,
- ein Schneidwerkzeug (108), wie einen Bohrer, der sich mindestens teilweise in der Buchse (114) erstreckt,
- eine Vorrichtung (112) zum Verschieben des Schneidwerkzeugs (108), die gestaltet ist, um das Schneidwerkzeug (108) nach vor und dann nach hinten zu bewegen, und
- einen Motor (106), der gestaltet ist, um das Schneidwerkzeug (108) in Drehung anzutreiben, und um die Vorrichtung (112) zum Verschieben des Schneidwerkzeugs (108) zu aktivieren,
wobei das Schneidwerkzeug (108) dazu bestimmt ist, bei seiner Vorwärts- und Rückwärtsbewegung durch den Einsatz (208) geführt zu werden.

6. Bohrsystem (100), umfassend:
- eine Bohrmaschine (102) nach Anspruch 5, und
- ein Gitter (124), das dazu bestimmt ist, an einem zu bohrenden Werkstück befestigt zu werden, und das Durchgangslöcher (128) zur Aufnahme der Buchse (114) der Bohrmaschine (102) aufweist.

7. Bohrsystem (100) nach Anspruch 6, wobei die Bohrmaschine (102) und das Gitter (124) jeweils zueinander ergänzende Vorrichtungen (120, 130) zum Verriegeln der Bohrmaschine (102) an dem Gitter (124) umfassen, wenn die Buchse (114) in einem der Durchgangslöcher (128) des Gitters (124) aufgenommen ist.

8. Verwendung eines Bohrsystems (100) nach Anspruch 6 oder 7, zum Bohren eines Luftfahrtstrukturteils.

9. Verwendung eines Bohrsystems (100) nach Anspruch 8, wobei ein menschlicher Nutzer die Bohrmaschine (102) handhabt, um ihre Buchse (114) in eines der Durchgangslöcher (128) des Gitters (124) einzuführen, danach den Motor (106) der Bohrmaschine (102) startet.

10. Verfahren zur Wartung einer Bohrmaschine (102) nach Anspruch 5, wobei der Einsatz (208) vom Hauptkörper (202) losgeschraubt wird, danach ein anderer Einsatz an dessen Stelle geschraubt wird.

## Claims

1. Guiding barrel for a cutting tool (108) such as a drill, having a rear end (206), provided with a conical outer surface to be press-fitted in a barrel support (116) of a drilling machine (102), comprising:
- a main body (202) having a front end (204) and the rear end (206) provided with the conical outer surface, and
- an insert (208) for guiding the cutting tool (108),
**characterised in that** the insert (208) is designed to be screwed to the front end (204) of the main body (202) and **in that** the main body (202) has an outer shoulder (224) oriented frontwards, intended to bear against a grille (124).

2. Barrel (114) according to claim 1, wherein the insert (208) comprises an outer complementary thread (212) of an inner thread (218) of the front end (204) of the main body (202), in order to be screwed in the front end (204) of the main body (202).

3. Barrel (114) according to claim 1 or 2, wherein the insert (208) delimits a guiding hole (210) of the cutting tool (108) having a certain diameter and wherein the main body (202) delimits the hole (214) comprising a first portion (220) intended to be located to the rear and in the continuity of the guiding hole (210) and having a diameter greater than that of the guiding hole (210).

4. Barrel (114) according to claim 3, wherein the hole (214) of the main body (202) further comprises a second portion (222) located to the rear and in the continuity of the first portion (220) and having a diameter greater than that of the first portion (220).

5. Drilling machine (102) comprising:
- a barrel support (116) having an opening (118),
- a barrel (114) according to any one of claims 1 to 4, the rear end (206) of which is intended to be press-fitted in the opening (118) of the barrel support (116),
- a cutting tool (108) such as a drill extending at least partially in the barrel (114),
- a device (112) for moving the cutting tool (108) designed to make the cutting tool (108) move forward then back, and
- a motor (106) designed to rotate the cutting tool (108) and to activate the device (112) for moving the cutting tool (108),
the cutting tool (108) being intended to be guided by the insert (208) during its forward and backward movement.

6. Drilling system (100) comprising:
- a drilling machine (102) according to claim 5, and
- a grille (124) intended to be fixed to a part to be drilled and having through holes (128) for receiving the barrel (114) of the drilling machine (102).

7. Drilling system (100) according to claim 6, wherein the drilling machine (102) and the grille (124) respectively comprise complementary devices (120, 130) of each other for locking the drilling machine (102) to the grille (124) when the barrel (114) is received in one of the through holes (128) of the grille (124).

8. Use of the drilling system (100) according to claim 6 or 7, to drill an aeronautical structural part.

9. Use of the drilling system (100) according to claim 8, wherein a human user handles the drilling machine (102) to insert its barrel (114) in one of the through holes (128) of the grille (124), then starts the motor (106) of the drilling machine (102).

10. Method for maintaining a drilling machine (102) according to claim 5, wherein, the insert (208) is unscrewed from the main body (202), then another insert is screwed in place.
